# EUROPEAN PATENT APPLICATION

(11) **EP 4 475 149 A1**
(43) Date of publication of application: **11.12.2024**
(21) Application number: 23178022.2
(22) Date of filing: 07.06.2023
(51) Int. Cl.: H01F 13/00, H01F 3/10

(54) **DEMAGNETIZATION OF MAGNET ELEMENTS OF A WIND TURBINE GENERATOR**

(71) Applicant: Siemens Gamesa Renewable Energy A/S, 7330 Brande (DK)
(72) Inventor: Azar, Ziad, Sheffield S10 4ED (GB); Gonzalez, Adolfo Garcia, 7400 Herning (DK)
(74) Representative: SGRE-Association

(57) **Abstract**

A demagnetization system for demagnetizing a magnet element (10) of a wind turbine generator component is provided. The magnet element (10) comprises at least one permanent magnet block (15). The demagnetization system (100) comprises a reluctance modulating component (20) and a moving arrangement (70) configured to provide a relative movement between the reluctance modulating component (20) and the magnet element (10). The reluctance modulating component (20) is configured to change a magnetic reluctance experienced by a magnetic flux of the one or more permanent magnet blocks (15) as the reluctance modulating component (20) moves past the magnet element (10). The system is configured to generate eddy currents in the at least one permanent magnet block (15) by providing said relative movement between the reluctance modulating component (20) and the magnet element (10), wherein the eddy currents heat the at least one permanent magnet block (15) to be demagnetized.

## Description

### FIELD OF THE INVENTION

The present invention relates to a demagnetization system for demagnetizing a magnet element of a wind turbine generator component and to a respective method of demagnetizing such magnet element.

### BACKGROUND

Over the past years, the size of wind turbines and their output power has been increasing significantly. Modern high power wind turbines include direct drive wind turbines in which the generator rotor is directly coupled to the wind turbine rotor without intervening gearbox. Such direct drive generators generally employ permanent magnets, usually on the generator rotor. For an exemplary wind turbine, six tons of NdFeB (neodymium iron boron) permanent magnets may be used on the generator rotor. It is desirable to re-use permanent magnet material and in particular to recover such permanent magnet material at the end of life of respective wind turbine generators.

Such recovery however faces several difficulties. To re-use material of permanent magnets, the permanent magnets generally need to be demagnetized. Demagnetization may be performed by heating the permanent magnets up to the Curie temperature. For example, NdFeB permanent magnets may be heated up to 350°C for demagnetization. The magnet elements used in wind turbine generators generally have a significant size, such as about 100x20x70 mm. The inventors have found that for demagnetizing a respective magnet element, the element can be placed in an oven and can be heated for approximately 40 minutes, which is required for a magnet element to reach a stable temperature throughout.

Such way of demagnetizing a magnet element is thus time-consuming. Further, a relatively large amount of energy may be required for the heating. Even further, it may not be possible to place several modules into the oven, since high forces develop between magnet elements, which may damage equipment and may be a risk to the operators operating the equipment. Demagnetization may thus be inefficient and time-consuming. Using equipment similar to a magnetizer for providing demagnetization is generally difficult, since it requires the magnet elements to be disassembled, which is difficult to achieve as long as the permanent magnet blocks inside the magnet element are still magnetized. Further, the use of induction heating for demagnetization faces the difficulty that the frequency for the heating may depend on the structure of the magnet element (which may include a magnet cover, steel plate, and the like) and may need to be tuned for different types of elements. It is thus desirable to facilitate the demagnetization of such magnet elements.

### SUMMARY

Accordingly, there is a need to mitigate at least some of the drawbacks mentioned above and to improve the demagnetization of magnet elements. It is in particular desirable to increase the efficiency of the demagnetization, to make a demagnetization more flexible and/or to increase the safety for service personnel performing the demagnetization.

This need is met by the features of the independent claims. The dependent claims describe embodiments of the invention.

According to an embodiment of the invention, a demagnetization system for demagnetizing a magnet element of a wind turbine generator component is provided. The magnet element comprises at least one permanent magnet block. The demagnetization system comprises a reluctance modulating component and a moving arrangement configured to provide a relative movement between the reluctance modulating component and the magnet element. The reluctance modulating component is configured to change a magnetic reluctance experienced by a magnetic flux of the one or more permanent magnet blocks as the reluctance modulating component moves past the magnet element. The system is configured to generate eddy currents in the at least one permanent magnet block by providing the relative movement between the reluctance modulating component and the magnet element, wherein the eddy currents heat the at least one permanent magnet block.

By such heating of the permanent magnet block, the magnet element may be demagnetized in an efficient manner. In particular, the eddy currents may be the result of the permanent magnet block's own magnetic flux density, so that the heating process may be concentrated within the permanent magnet material. Accordingly, an efficient heating of the permanent magnet block may be achieved. In particular, the relative movement between the reluctance modulating component and the magnet element may result in a change of the reluctance of a magnetic circuit through the at least one permanent magnet block, thus resulting in a change of the magnetic flux through the permanent magnet block. Such changes in flux may induce the eddy currents in the permanent magnet block, which heats up the permanent magnet block. The change in magnetic reluctance due to the relative movement may in particular change the magnetic flux density (i.e., the B-field), the flux through a surface being the surface integral of the B-field over the respective surface.

Magnetic reluctance may also be described as a kind of magnetic resistance. It is in particular the resistance that is experienced by a magnetic flux in a magnetic circuit. The magnetic flux corresponds to the magneto-motive force divided by the magnetic reluctance. As the magnetic reluctance changes, the magnetic permeance changes inversely; magnetic permeance corresponds to a magnetic conductivity and is the inverse of the magnetic reluctance. Magnetic reluctance may be understood as a property of a material that opposes the generation of magnetic flux in a magnetic circuit (in an analogy to an electric resistance which opposes a current in an electric circuit).

Since by such system, the heating occurs via the eddy currents that are being generated in the permanent magnet block, the heating may not depend on any other components that may form part of the magnet element, such as a housing, enclosure or encapsulation, a base plate, a cover, or the like. Further, by such direct heating, the energy required for the heating may be reduced and the heating may occur faster and more efficiently.

In an embodiment, the reluctance modulating component (which may be abbreviated herein as modulating component or simply as component) may have a spatial extension in a direction of the relative movement. The magnetic reluctance of the reluctance modulating component may change along the spatial extension. When the modulating component moves relative to the magnet element, the magnetic flux generated by the at least one permanent magnet block may thus experience differences in magnetic permeance (due to the movement and since the component has a changing reluctance along its extension), thus resulting in a flux modulation and respective eddy current generation. Such extension of the modulating component may be a linear extension or a circumferential extension, e.g. a circular extension.

The reluctance modulating component may have a magnetic permeability that changes, for example repeatedly or periodically, along the spatial extension of the reluctance modulating component. Such change in magnetic permeability may occur step-wise, continuously, or the like. Such change in magnetic permeability may for example be achieved by providing different types of material having different permeability along the spatial extension of the component. In general, the magnetic reluctance is inversely proportional to the magnetic permeability.

The reluctance modulating component may for example comprise different sections in a direction of the relative movement. The sections may face the magnet element. Neighboring sections may have a different magnetic reluctance, and in particular a different permeability, to provide the change in magnetic reluctance. As an example, the component may have alternating sections of a ferromagnetic material and a paramagnetic material (such as air) or diamagnetic material. An efficient change of the magnetic reluctance may thus be achieved as the modulating component moves relative to the magnet element. The different sections of the component may thus present a different magnetic resistance to the flux generated by the at least one permanent magnet block.

A width of each section in the direction of relative movement may be less than half of the extension of the magnet element in the direction of relative movement. By such geometry, a higher frequency of the change of magnetic reluctance may be achieved, thus resulting in higher eddy currents and higher thermal losses being induced.

In an embodiment, the reluctance modulating component may be a circular component having a (inner or outer) circumferential face that faces the magnet element. The relative movement may comprise a relative rotational movement between the circular component and the magnet element. The magnet element may for example be provided in a radial direction outside the circular component, or in a radial direction inside the circular component. By such arrangement, a continuously repeating change in magnetic reluctance may be achieved, thus providing a fast and efficient induction of eddy currents and heating. For example, the circumferential face may have the (periodically) changing magnetic reluctance. It may include the different sections that may alternate in the circumferential direction and that have a different magnetic permeability for neighboring sections.

The circular component may be a rotor, and the moving arrangement may be configured to rotate the rotor relative to the magnet element. The moving arrangement may thus be implemented with reduced technical complexity and the relative movement may be provided in an efficient way. In particular, such arrangement may allow a high frequency of the change of the magnetic reluctance experienced by the flux of the magnet element.

The moving arrangement may for example comprise a motor to rotate the rotor. The motor may be an electric motor, such as an induction motor, but may alternatively be a hydraulic or pneumatic motor.

The rotor may have a plurality of poles and the poles may cause the change in magnetic reluctance as the poles rotate past the magnet element. Such poles may for example be protrusions that protrude from a ring or disk of the rotor. Such poles may be made of a ferromagnetic material, such as an iron or iron-based material. In particular, the poles may have a first higher permeability, and the poles may be separated by regions, such as slots, having a second lower permeability (for example air). Accordingly, as the poles rotate past the magnet element, the magnetic flux provided by the permanent magnet block experiences a changing magnetic resistance, thus modulating the magnetic flux and providing an efficient generation of eddy currents.

The rotor may in particular be a salient pole rotor. The rotor may accordingly have a high saliency. Optionally, the poles of the rotor may have pole shoes. It is preferred that the rotor has no rotor windings.

In an exemplary implementation, the moving arrangement may be configured to rotate the rotor with at least 3.000 rpm. This may result in a high frequency of the change of magnetic reluctance experienced by the permanent magnet block and thus in a high frequency of the change of magnetic flux, resulting in increased generation of eddy currents. In an example, the rotor may have a diameter of at least 0.5 or 1 m. The rotor may have at least 20, 30, or 40 poles. By increasing the number of poles, the frequency of change of the magnetic reluctance experienced by the flux of the at least one permanent magnet block may further be increased. It should be clear that the parameters, such as a diameter of the rotor, an airgap towards the magnet element, and a number of poles may be adjusted according to the size of the magnet element, in particular of the one or more permanent magnet blocks.

In an example, the frequency at which poles of the rotor pass the magnet element may be at least 300, 500, or 1,000 Hz. The frequency may lie within the range of 1,000 to 10,000 Hz.

The rotor may be a laminated rotor. For example, the poles may be composed of laminated sheets, which may be arranged to reduce eddy currents induced in the rotor. This way, an excessive heating of the rotor due to eddy currents induced in the rotor may be avoided.

In an embodiment, the demagnetization system further comprises at least one second reluctance modulating component, wherein the magnet element is arranged between the reluctance modulating component and the second reluctance modulating component. The moving arrangement may further be configured to provide a relative movement between the second reluctance modulating component and the magnet element. The second reluctance modulating component may be configured to change a magnetic reluctance experienced by a magnetic flux of the one or more permanent magnet blocks as the second reluctance modulating component moves past the magnet element. The second reluctance modulating component may thus provide a similar functionality as the formerly mentioned (first) reluctance modulating component, and it may have a similar structure. It may in particular include respective sections of different magnetic reluctance, in particular different magnetic permeability. By providing such second reluctance modulating component, demagnetization may further be accelerated.

The second reluctance modulating component may for example be implemented as a second rotor, complementarily to the above-mentioned (first) rotor. For example, one or more magnet elements may be arranged (in radial direction) between the first rotor and the second rotor, the reluctance modulating part of each rotor facing the one or more magnet elements. The first rotor may be an inner rotor and the second rotor may be an outer rotor, or vice versa. Also other configurations may employ a second reluctance modulating component. For example, one or more magnet elements may be arranged between a (first) linearly extending reluctance modulating component and the second reluctance modulating component, which may likewise extend linearly, e.g. in parallel to the first reluctance modulating component. The one or more magnet elements may be moved relative to both of these components, which may be stationary, or both components may be moved simultaneously with respect to stationary magnet elements; combinations of such configurations are also conceivable.

In an embodiment, the demagnetization system further comprises a flux-enhancing component that is configured to increase the magnetic flux of the magnet element. The system may be configured to arrange the magnet element on the flux-enhancing component (in particular during demagnetization). The flux-enhancing component may in particular be configured to reduce a reluctance of a magnetic circuit of the at least one permanent magnet block. A high magnetic flux density may thus be provided in the flux-enhancing component, which further increases the flux in the at least one permanent magnet block. By such increase in flux, the losses generated in the at least one permanent magnet block by the induced eddy currents may be further increased, thus resulting in a faster and more efficient heating. In other words, the flux-enhancing component may increase the permeance of the magnetic circuit formed through the at least one permanent magnet block. For example, the flux-enhancing component may be configured to have a relatively high permeability (higher than air). It may for example have a permeability larger than 10⁻⁵ H/m, preferably larger than 10⁻⁴ H/m. The relative permeability may for example be at least 10, preferably at least 100. It may in particular be made of a ferromagnetic material.

For example, the flux-enhancing component may comprise a plate arranged on a side of the magnet element that is opposite to a side that faces the reluctance modulating component. The magnet element may accordingly be positioned between the flux-enhancing component and the reluctance modulating component. An efficient modulation of the magnetic flux through the magnet element and thus an efficient induction of eddy currents may thereby be achieved. The plate may be a ferromagnetic plate, it may for example be a metal plate; it may be made of iron or an iron alloy.

The magnet element may consist of a single or of plural permanent magnet blocks, or may comprise one or more permanent magnet blocks and further components, such as a housing, an enclosure, an encapsulation, or the like.

The demagnetization system may further comprise a support configured to support the magnet element at a (predefined) distance relative to the reluctance modulating component during demagnetization. Such support may for example comprise a form-fitting connection (e.g., a T-shaped slot), a clamp, or the like to hold the magnet element in place. Additionally or alternatively, the support may hold the magnet element in place by magnetic force, which is generated by the magnet element. However, such magnetic force alone may not be sufficient, since the magnetic force will generally become weaker during demagnetization.

The magnet element may in particular be supported adjacent to the modulating component. The magnet element may be supported relative to the reluctance modulating component so as to provide a gap (preferably of a predefined size) between the magnet element and the reluctance modulating component. Such gap is preferably small enough so that eddy currents are induced by the reluctance modulating component during the relative movement to heat the magnet element.

The support may for example include a slot into which the magnet element is slit or pushed; a base plate of the magnet element may for example be held in a form-fitting manner in such slot. Other possibilities include a clamp, a support plate, or a carriage on a conveyor that transports the magnet element past the modulating component to effect the relative movement. Other configurations are certainly conceivable.

It should be clear that the demagnetization system may be configured to demagnetize one, two, three, or more magnet elements simultaneously. The moving arrangement may then provide a relative movement between the reluctance modulating component and the plural magnet elements. The support may be configured to support the one, two, three or more magnet elements relative to the reluctance modulating component. The demagnetization may thus be made more efficient, since it may allow simultaneous demagnetization of plural magnet elements. For example, the component may be moved past plural magnet elements, which may for example be distributed circumferentially around or within a rotor, or plural magnet elements may be moved past the reluctance modulating component, for example by a conveyor, by gravity, or the like.

In an embodiment, the system may be configured to heat the at least one permanent magnet block by the eddy currents to a temperature at or above the Curie temperature of the at least one permanent magnet block to demagnetize the at least one permanent magnet block. Demagnetization may generally be performed by heating above the Curie temperature, at which the demagnetization occurs. By such heating, an efficient demagnetization may be achieved.

In an embodiment, the demagnetization system further comprises a transport system configured to receive a magnet element and to automatically transport the magnet element to the moving arrangement, and/or to transport a demagnetized magnet element (from the moving arrangement) to a collection stage or to a further processing stage. The transport system may for example comprise a conveyor, such as a belt, chain, or slat conveyor. A further processing stage may for example be a separation stage at which the magnet element is separated into two or more constituents. For example, the magnet element may be a magnet module that comprises the at least one permanent magnet block, and that further comprises a cover, enclosure, encapsulation or the like. Preferably, it includes a base plate and a cover attached to the base plate, the at least one permanent magnet block being disposed between the cover and the base plate.

The transport system may further be configured to automatically position the magnet element on a support that supports the magnet element relative to the reluctance modulating component. The transport system may itself comprise the support, or it may for example comprise an actuator that moves the magnet element onto the support. Such actuator may for example be a hydraulic or pneumatic cylinder that pushes or pulls the magnet element onto the support, that for example pushes the magnet element into a slot in which it is being held in a form-fitting manner. In other implementations, such actuator may for example include a clamp, a gripper, or the like that holds the magnet element in place during demagnetization.

According to a further embodiment, the demagnetization system comprises a controller configured to control the relative movement. The controller may be configured to control the generation of the eddy currents by the relative movement so as to heat the at least one permanent magnet block until the Curie temperature is reached. The controller may for example adjust a duration and/or velocity of the relative movement, may adjust a frequency of the change of the magnetic reluctance, or the like. It may for example control a rotational speed and a duration of operation of a motor driving the rotor mentioned above. The controller may further be configured to control the transport system. Such controller may be a separate controller or may form part of a larger controller that may for example control a recycling system for recycling the magnet element.

According to a further embodiment of the invention, a method of demagnetizing a magnet element of a wind turbine generator component is provided. The magnet element comprises at least one permanent magnet block. The method comprises generating eddy currents in the at least one permanent magnet block by providing a relative movement between a reluctance modulating component and the magnet element, wherein the reluctance modulating component changes a magnetic reluctance experienced by a magnet flux of the one or more permanent magnet blocks as the reluctance modulating component moves past the magnet element. The method further comprises heating the at least one permanent magnet block by the eddy currents to demagnetize the magnet element. By such method, advantages similar to the ones outlined further above may be achieved.

The method may further comprise any of the steps described herein with respect to the demagnetization system. Further, the demagnetization system, in particular its controller, may be configured to perform any of the methods described herein.

It is to be understood that the features mentioned above and those yet to be explained below can be used not only in the respective combinations indicated, but also in other combinations or in isolation, without leaving the scope of the present invention. In particular, the features of the different aspects and embodiments of the invention can be combined with each other unless noted to the contrary.

### BRIEF DESCRIPTION OF THE DRAWINGS

The foregoing and other features and advantages of the invention will become further apparent from the following detailed description read in conjunction with the accompanying drawings. In the drawings, like reference numerals refer to like elements.
Fig. 1 is a schematic drawing illustrating a demagnetization system according to an embodiment.
Fig. 2 is a schematic drawing illustrating a demagnetization system according to a further embodiment.
Fig. 3 is a schematic drawing illustrating a demagnetization system according to an embodiment, which is a modification of the system of Fig. 1.
Fig. 4 is a schematic drawing illustrating a demagnetization system according to a further embodiment.
Fig. 5 is a schematic drawing illustrating a magnet element according to an embodiment.
Fig. 6 is a schematic diagram illustrating losses in the magnet element in the demagnetization system of figure 1 due to induced eddy currents.
Fig. 7 is a schematic diagram illustrating torque on the rotor of the demagnetization system of figure 1 during demagnetization.
Fig. 8 is a flow diagram illustrating a method of demagnetizing a magnet element according to an embodiment.

### DETAILED DESCRIPTION

In the following, embodiments of the invention will be described in detail with reference to the accompanying drawings. It is to be understood that the following description of the embodiments is given only for the purpose of illustration and is not to be taken in a limiting sense. It should be noted that the drawings are to be regarded as being schematic representations only, and elements in the drawings are not necessarily to scale with each other. Rather, the representation of the various elements is chosen such that their function and general purpose become apparent to a person skilled in the art. As used herein, the singular forms "a," "an," and "the" are intended to include the plural forms as well, unless the context clearly indicates otherwise. The terms "comprising," "having," "including," and "containing" are to be construed as open-ended terms (i.e., meaning "including, but not limited to,") unless otherwise noted.

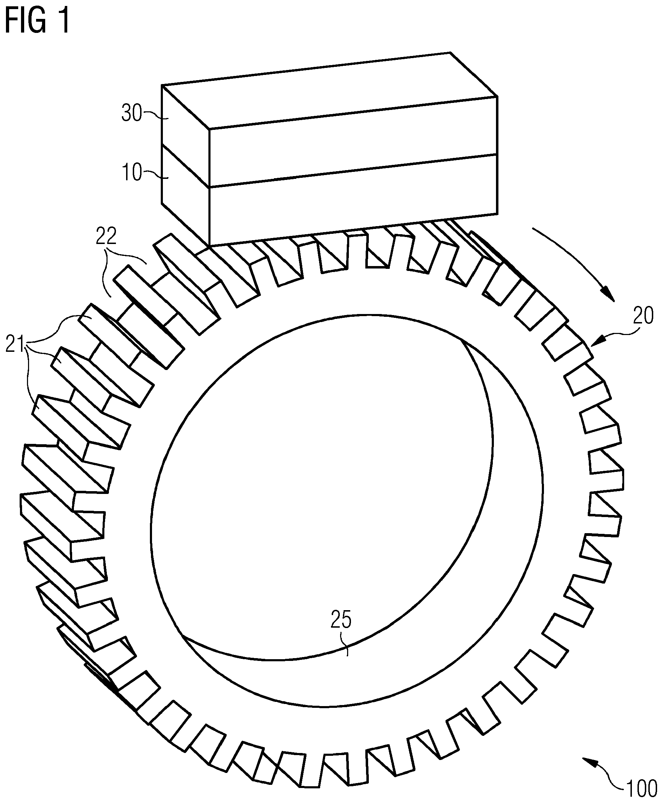

Fig. 1 schematically illustrates a demagnetization system 100 which includes a reluctance modulating component 20 and a moving arrangement that provides a relative movement between the magnet element 10 and the reluctance modulating component 20. In the example of Fig. 1, the component 20 is formed as a rotor 25, and the moving arrangement comprises an actuator (not shown in Fig. 1) that rotates the rotor 25 relative to the magnet element 10. The rotor 25 has an outer circumferential surface that faces the magnet element 10. Along the direction of relative movement, as indicated by the arrow, the component 20 has an extension along which the magnetic reluctance changes, in particular periodically. This is achieved by providing sections 21 of high magnetic permeability and sections 22 of low magnetic permeability, wherein sections 21 and 22 are arranged alternatingly. The magnetic reluctance thus changes significantly between neighboring sections. As the rotor 25 is rotated, these sections of deferring reluctance move past the magnet element 10. The magnetic flux of one or more permanent magnet blocks of magnet element 10 thus experiences a changing magnetic reluctance (or correspondingly, a changing magnetic permeance). By the changing permeance or reluctance, which is seen by the magnetic flux of the magnet element 10, eddy currents are being induced in the permanent magnet block. Eddy currents are thus induced in the permanent magnet material itself, thereby generating heat. By providing the relative movement at a respective speed and for a respective duration, the magnet element 10, in particular its one or more permanent magnet blocks, can be heated up to the Curie temperature to thereby demagnetize the one or more permanent magnet blocks. An efficient demagnetization is thereby achieved.

In the example of Fig. 1, the sections 21 of high permeability are provided by poles of the rotor 25, whereas the sections 22 of low permeability are provided by slots or spaces between the poles. Sections 21, 22 are each spaced sufficiently wide so as to cause the flux of magnet element 10 to experience a significant change in magnetic reluctance, as sections 21, 22 move past magnet element 10. Sections 22, e.g. the slots, may have a width in circumferential direction that is at least half the width of the sections 21, e.g. the poles. The width in circumferential direction of sections 22 (at the outer circumferential surface) may for example lie between 50% and 150% of the width in circumferential direction of sections 21. It should be clear that by adjusting the number of sections 21, 22 present on the outer circumferential surface, by adjusting the diameter of rotor 25, and by adjusting the rotational speed of rotor 25, the frequency at which the sections 21, 22 pass the magnet element 10 can be adjusted. A relatively high frequency may be selected to achieve an efficient heating. For example, the rotor may be rotated at more than 3.000 rpm, e.g. at about 6.000 rpm, and may include a significant number of poles, such as 20 poles, 30 poles, 40 poles or more.

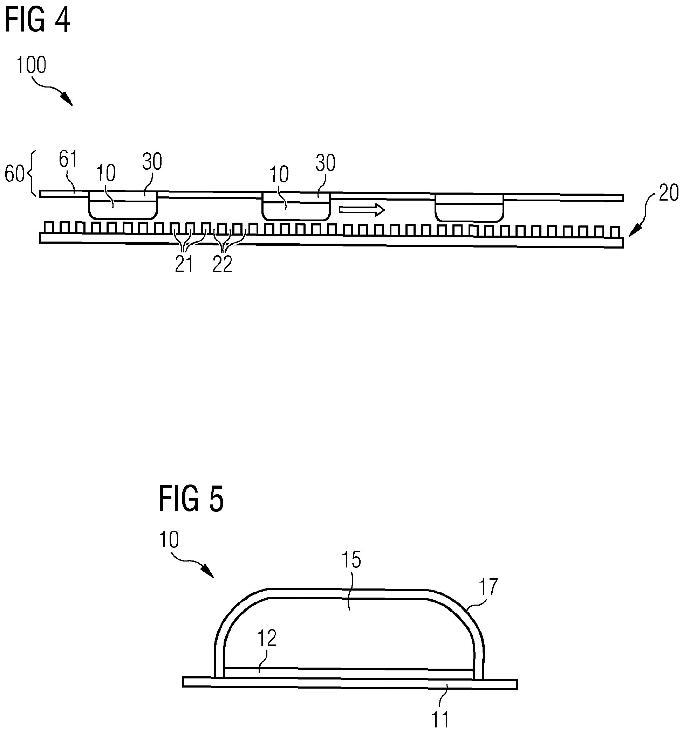

It should be clear that Fig. 1 only illustrates an exemplary geometric configuration of the component 20, and that a plurality of different configurations are conceivable. For example, sections 21, 22 may be provided on an inner circumferential surface of rotor 25, and magnet element 10 may be arranged within the rotor 25. Further, instead of a rotor, component 20 may extend linearly, as for example explained below with respect to Fig. 4. Further, magnet element 10 may be moved instead of the component 20. Also, plural magnet elements 10 may be provided and may for example be distributed around the rotor 25.

The demagnetization system 100, and in particular component 20, may thus resemble a rotating electrical machine, such as a reluctance motor. Whereas in a reluctance motor, the magnetic field is generated by windings around stator poles, the rotor aligning with the magnetic field to reduce the reluctance, the demagnetization system of Fig. 1 rotates the rotor instead and thereby induces the current in the "stator", i.e. in the one or more magnet elements 10. An efficient generation of eddy currents in magnet element 10 may thereby be achieved, so that a fast heating of the permanent magnet material becomes possible, irrespective of the configuration of magnet element 10.

To increase the flux through magnet element 10, a flux-enhancing component 30 is provided. It is arranged on a side of magnet element 10 that is opposite to the side on which the component 20 is arranged, as shown in Fig. 1. Flux-enhancing component 30 may have a high permeability, it may be provided in form of a back plate on which the magnet element 10 is arranged. Flux-enhancing component 30 may for example be made of a ferromagnetic material; it may be made from iron, an iron alloy, or other iron-based composition. It may in particular allow the one or more permanent magnet blocks to have a higher permeance coefficient (PC) point. By increasing the flux, the losses induced in the one or more permanent magnet blocks are likewise increased. Accordingly, heating may be accelerated.

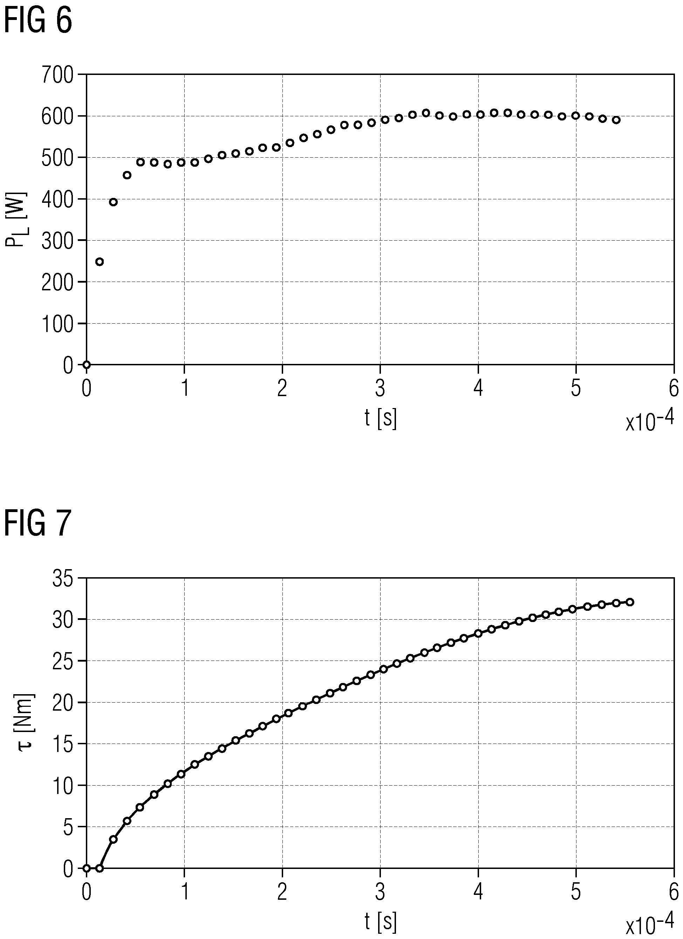

The configuration of the demagnetization system as illustrated in Fig. 1 has been employed in a finite element simulation to determine the heating of the magnet element 10. Fig. 6 illustrates the losses P_{L} in the magnet element 10 with a speed of rotor 25 of 6.000 rpm. Fig. 7 illustrates the torque τ as experienced by rotor 25 over time t. As can be seen, significant losses are induced in the magnet element 10, which in the simulation stay relatively constant with time (the loss power is on average larger than 500 Watt). As this power is deposited directly as heat in the magnet element 10, the magnet element 10 heats up quickly and reaches the Curie temperature for demagnetization within a relatively short amount of time. The actuator that drives the rotor 25 should be capable of providing sufficient torque to account both for the losses resulting from the overall system and the braking torque. The simulation considers the conductivity in the rotor and thus accounts for the eddy currents that are generated in the rotor 25 (in particular the reaction field of the eddy currents). To reduce the amount of heat being generated in the rotor 25, rotor 25 can be provided as a laminated rotor that reduces such circulating currents. The simulation does not account for a demagnetization of the magnet element 10 with the increasing temperature. To provide a uniform heating, the rotational speed of rotor 25 may thus be increased during the demagnetization process to compensate for the reduction of the magnetic flux density.

In addition, the demagnetization system 100 may include additional heaters to heat the magnet element 10, such as an induction heater, a thermal heater or the like. Heating of magnet element 10 may thus further be accelerated, and such configuration may allow a fine tuning of the different heating methods to provide an efficient demagnetization, in particular a demagnetization that reduces energy consumption, time and provides a high demagnetization quality.

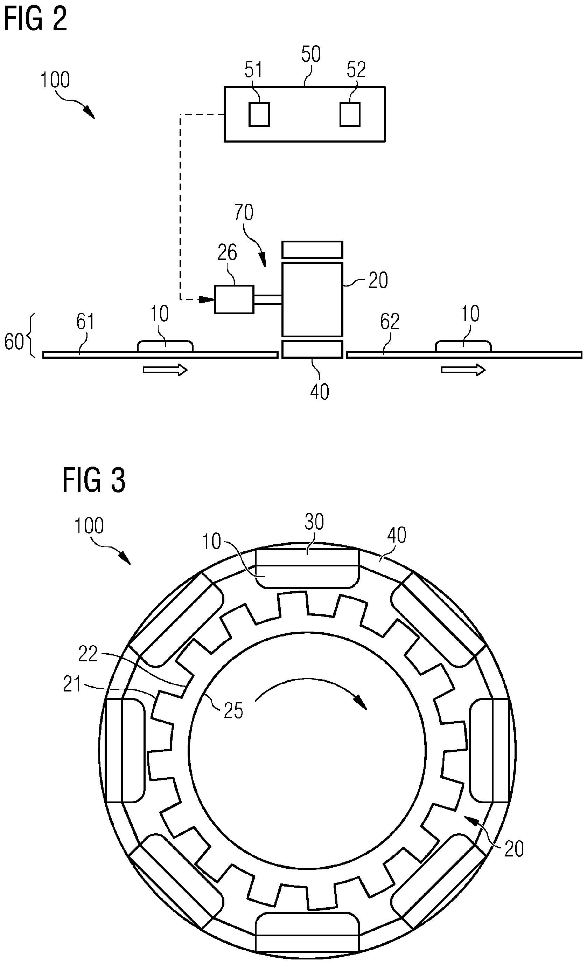

Fig. 2 illustrates a particular implementation of the demagnetization system 100 of Fig. 1, so that the above explanations are likewise applicable. The moving arrangement 70 of the system 100 of figure 2 includes the motor 26 and the respective components (such as a shaft between motor 26 and rotor 25), which provide the relative movement between the component 20 and the magnet element 10. The reluctance modulating component 20 is driven by the motor 26, such as an electric motor. This may occur under control of a controller 50. Controller 50 may control the speed and time of the rotation of rotor 25 in order to achieve the desired demagnetization temperature, in particular the Curie temperature, of magnet element 10. System 100 may further comprise a support 40 that supports the magnet element 10 during demagnetization. Support 40 may be pre-configured or may be adjustable so as to provide a gap between the magnet element 10 and the outer circumferential surface of rotor 25 dimensioned such that an efficient generation of eddy currents within magnet element 10 is ensured.

Fig. 5 illustrates a particular example of a magnet element 10. It comprises one or more permanent magnet blocks 15, e.g. one, two, three, or more, e.g. one to ten. Magnet element 10 further comprises an enclosure, housing or encapsulation that encloses the one or more permanent magnet blocks 15. In the present example, the one or more permanent magnet blocks 15 are mounted by an adhesive 12 on a base plate 11 (e.g., steel) and are covered by a cover 17 (e.g. sheet metal). Permanent magnet blocks 15 may thus be protected from the environment, which is particularly advantageous in offshore environments.

Support 40 may be configured to hold the magnet element 10 in place. For this purpose, it may for example comprise T-shaped slots into which the magnet elements 10 can be inserted in a form-fitting manner. The base plate 11 may for example be held in place within such T-shaped slot. In other configurations, other types of form-fitting mounts, a clamp, a gripper, or the like may be used for holding magnet element 10 in place. Support 40 may include one or a combination of such configurations.

Demagnetization system 100 further comprises a transport system 60 which transports magnet elements 10 to the support 40 and after demagnetization away from support 40 to a different processing stage or collection system. Transport system 60 may include a first conveyor 61 that may receive magnet elements 10, e.g. from an extraction system that extracts magnet elements 10 from a component of a wind turbine rotor, such as from a generator rotor. Transport system 60 may further comprise an actuator that places the magnet element 10 on or in the support 40. This may occur by the conveyor 61 itself, or may include an additional active means such as a hydraulic, pneumatic, or electrically driven cylinder which may push the magnet element 10 onto or into the support 40. The same or a different actuator may further push the magnet element out of support 40 after demagnetization. Transport system 60 may comprise a second conveyor 62 onto which the magnet element is pushed and that transports the magnet element to the next processing stage such as a separation stage where the one or more permanent magnet blocks 15 are separated from the housing. It should be clear that other types of actuators or active means may be provided for disposing the magnet element 10 on the support 40, such as a robotic arm or the like.

Controller 50 may include a processing unit 51 and a memory 52 which stores control instructions that are executed by processing unit 51. Controller 50 may further control the transport system 60 and the respective conveyors and/or actuators comprised therein. Controller 50 may thus provide an automatic demagnetization operation by controlling the demagnetization system 100. In particular, no operator interaction may be necessary for demagnetizing the magnet elements 10. Processing unit 51 may include a microprocessor, a digital signal processor, an application-specific integrated circuit or the like. Memory 52 may include RAM, ROM, or other types of volatile and non-volatile memory.

Fig. 3 illustrates a particular implementation of the demagnetization system 100 of Figs. 1 or 2. Rotor 25 again includes poles and slots therebetween to provide a modulation of the magnetic reluctance when being rotated relative to the magnet element. In the example of Fig. 3, plural magnet elements 10 are distributed circumferentially around the rotor 25. A flux-enhancing component 30 is provided for each magnet element 10. Flux-enhancing component 30 may be mounted to or integrated with the support 40. It may for example provide the T-shaped slot into which magnet element 10 is inserted. Preferably, parts of support 40 that connect the different flux-enhancing components 30 are made of a material having a relatively low thermal conductivity. This way, it can be ensured that the heat capacity of the support 40 is kept low and that the heat generated in magnet elements 10 is not conducted away. A more efficient heating may thereby be achieved. Plural conveyors 61, 62 may be provided to load magnet elements 10 into the support 40 at each of the positions illustrated in Fig. 3. Alternatively, the support 40 may be rotated into a position in which a magnet element can be loaded by conveyor 61, and may be kept stationary during the demagnetization process. It should be clear that this is only an exemplary implementation, and that a different number of magnet elements may be distributed around the circumferential direction. Similarly, a different type of mount 40 may be provided, and no or differently shaped flux-enhancing components 30 may be provided.

It becomes readily apparent that by the arrangement as shown in Fig. 3, plural magnet elements 10 can be demagnetized at the same time by rotation of the rotor 25. A fast and energy-efficient demagnetization of plural magnet elements thus becomes possible. It should be clear that the torque required to rotate the rotor 25 will generally increase with the number of magnet elements 10 distributed around the rotor 25.

In other implementations, a second reluctance modulating component (not shown) may be arranged on the other side of magnet element(s) 10. For example, an outer rotor may additionally be provided with a reluctance modulating component that faces the magnet elements, for example in form of respective poles of the rotor corresponding to the poles of sections 21 of rotor 25. The rotor may then likewise be rotated to create further eddy currents inside the magnet element(s) 10. In such configuration, no flux-enhancing component 30 may be provided. The direction of rotation is preferably such that the eddy currents induced by both reluctance modulating components add to maximize losses.

Fig. 4 illustrates another possible implementation. In contrast to the demagnetization system of Figs. 1 to 3, the reluctance modulating component 20 is stationary in the example of Fig. 4. Instead, the magnet elements 10 are provided on a transport system 60, in particular on a conveyor 61, that transports the magnet elements 10 past the component 20 to provide the relative movement. The moving arrangement may thus comprise the conveyor 61. Again, component 20 comprises sections 21 of high permeability and sections 22 of low permeability. As the magnet elements 10 move along sections 21, 22, the reluctance of the magnetic circuit changes, thus changing the flux in magnet element 10, resulting in the induction of eddy currents in the same way as described further above. The component 20 may have a sufficient length and a sufficient number of poles or teeth 21 so that the magnet elements 10 are heated to the Curie temperature for demagnetization when being moved along component 20. For this purpose, the component 20 may also prescribe a closed path (e.g., an oval or circle) along which the magnet elements 10 are moved continuously until the desired demagnetization temperature is reached. Again, a flux-enhancing component 30 can be provided, e.g. on conveyor 61, onto which the magnet element 10 is mounted. Besides the differences in geometry, the explanations provided above with respect to Figs. 1 to 3 apply correspondingly to the embodiment of Fig. 4.

Also in the embodiment of figure 4, it is possible to add a second reluctance modulating component. Such second reluctance modulating component may have a structure that is similar or the same as the one of reluctance modulating component 20 of figure 4. It may be provided on the other side of magnet elements 10 so that the magnet elements 10 are arranged between the reluctance modulating component 20 and the second reluctance modulating component (not shown). Accordingly, as the magnet elements 10 are moved, they move with respect to both reluctance modulating components so that high eddy currents and thus higher losses can be generated in the magnet elements. Again, the flux-enhancing component 30 may not be present in such configuration.

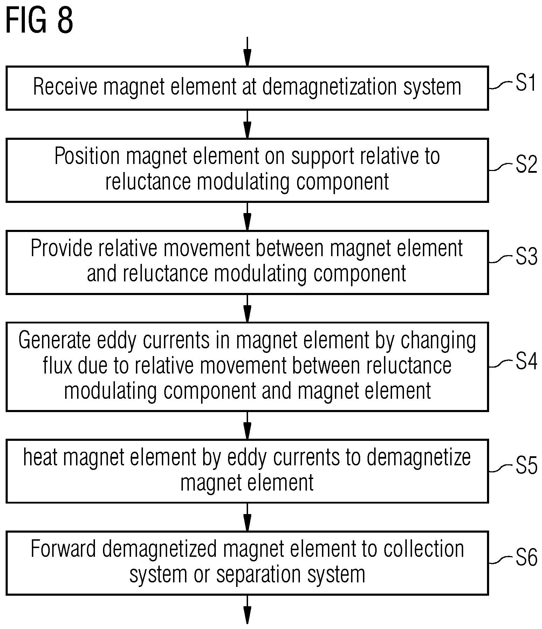

Fig. 8 is a flow-diagram that schematically illustrates a method of demagnetizing a magnet element according to an embodiment. In step S1, the magnet element is received at the demagnetization system, for example at the conveyor 61 of Fig. 2 or directly at the support 40. In optional step S2, the magnet element is positioned on the support 40 relative to the reluctance modulating component 20. As mentioned above, such relative positioning may ensure a desired distance between the magnet element 10 and component 20 that results in an efficient induction of eddy currents. In step S3, the relative movement is provided between the magnet element 10 and the reluctance modulating component 20. This may occur by rotating the rotor 25 in the embodiments of Figs. 1 to 3, by operating the conveyor 61 in the embodiment of Fig. 4, or by any other conceivable means. By the relative movement, the reluctance that the magnet element 10 sees changes frequently, thereby changing the flux through the magnet element 10 and inducing eddy currents in step S4. By means of these eddy currents, the magnet element is heated in step S5. The heating continues until the magnet element reaches a desired degree of demagnetization, in particular until the temperature of the at least one permanent magnet block 15 reaches or exceeds the Curie temperature. This may occur under control of the controller 50. After the demagnetization, the demagnetized element may be forwarded to a collection system or separation system in the optional step S6. This may for example occur by the conveyor 62 of Fig. 2, or directly by the conveyor 61 of Fig. 4. It should be clear that the method may comprise any of the other steps disclosed herein, in particular with respect to Figs. 1 to 7.

While specific embodiments are disclosed herein, various changes and modifications can be made without departing from the scope of the invention. The present embodiments are to be considered in all respects as illustrative and non-restrictive, and all changes coming within the meaning and equivalency range of the appended claims are intended to be embraced therein.

## Claims

1. A demagnetization system for demagnetizing a magnet element (10) of a wind turbine generator component, wherein the magnet element (10) comprises at least one permanent magnet block (15), wherein the demagnetization system (100) comprises:
- a reluctance modulating component (20); and
- a moving arrangement (70) configured to provide a relative movement between the reluctance modulating component (20) and the magnet element (10), wherein the reluctance modulating component (20) is configured to change a magnetic reluctance experienced by a magnetic flux of the one or more permanent magnet blocks (15) as the reluctance modulating component (20) moves past the magnet element (10),
wherein the system is configured to generate eddy currents in the at least one permanent magnet block (15) by providing said relative movement between the reluctance modulating component (20) and the magnet element (10), wherein the eddy currents heat the at least one permanent magnet block (15).

2. The demagnetization system according to claim 1, wherein the reluctance modulating component (20) has a spatial extension in a direction of the relative movement and wherein a magnetic reluctance of the reluctance modulating component (20) changes along the spatial extension.

3. The demagnetization system according to claim 2, wherein the reluctance modulating component (20) has a magnetic permeability that changes, preferably periodically, along the spatial extension of the reluctance modulating component (20) .

4. The demagnetization system according to any of the preceding claims, wherein the reluctance modulating component (20) comprises different sections (21, 22) in a direction of the relative movement, said sections (21, 22) facing the magnet element (10), wherein neighboring sections (21, 22) have a different magnetic reluctance to provide said change in magnetic reluctance.

5. The demagnetization system according to any of the preceding claims, wherein the reluctance modulating component (20) is a circular component having a circumferential face that faces the magnet element (10), wherein the relative movement comprises a relative rotational movement between the circular component and the magnet element (10).

6. The demagnetization system according to claim 5, wherein the circular component is a rotor (25), wherein the moving arrangement (70) is configured to rotate the rotor (25) relative to the magnet element (10).

7. The demagnetization system according to claim 6, wherein the rotor (25) has a plurality of poles, wherein said poles cause said change in magnetic reluctance as the poles rotate past the magnet element (10).

8. The demagnetization system according to any of the preceding claims, further comprising at least one second reluctance modulating component, wherein the magnet element (10) is arranged between the reluctance modulating component (20) and the second reluctance modulating component, and wherein the moving arrangement is configured to provide a relative movement between the second reluctance modulating component (20) and the magnet element (10), wherein the second reluctance modulating component (20) is configured to change a magnetic reluctance experienced by a magnetic flux of the one or more permanent magnet blocks (15) as the second reluctance modulating component (20) moves past the magnet element (10).

9. The demagnetization system according to any of the preceding claims, further comprising a flux enhancing component (30) configured to increase the magnetic flux of the magnet element (10), wherein the system is configured to arrange the magnet element (10) on the flux enhancing component (30).

10. The demagnetization system according to claim 9, wherein the demagnetization system is configured to support the magnet element (10) between the flux enhancing component (30) and the reluctance modulating component (20), wherein the flux enhancing component (30) preferably comprises a plate.

11. The demagnetization system according to any of the preceding claims, further comprising a support (40) configured to support the magnet element (10) at a distance relative to the reluctance modulating component (20) during demagnetization.

12. The demagnetization system according to any of the preceding claims, wherein the demagnetization system (100) is configured to heat the at least one permanent magnet block (15) by the eddy currents to a temperature at or above the Curie temperature of the at least one permanent magnet block (15) to demagnetize the at least one permanent magnet block (15) .

13. The demagnetization system according to any of the preceding claims, further comprising a transport system (60) configured to receive a magnet element (10) and to automatically transport the magnet element (10) to the moving arrangement (70) and/or to transport a demagnetized magnet element (10) to a collection stage or to a further processing stage.

14. The demagnetization system according to any of the preceding claims, further comprising a transport system (60) configured to automatically position the magnet element (10) on a support (40) that supports the magnet element (10) relative to the reluctance modulating component (20).

15. A method of demagnetizing a magnet element of a wind turbine generator component, wherein the magnet element (10) comprises at least one permanent magnet block (15), wherein the method comprises:
- generating eddy currents in the at least one permanent magnet block (15) by providing a relative movement between a reluctance modulating component (20) and the magnet element (10), wherein the reluctance modulating component (20) changes a magnetic reluctance experienced by a magnetic flux of the one or more permanent magnet blocks (15) as the reluctance modulating component (20) moves past the magnet element (10); and
- heating the at least one permanent magnet block (15) by the eddy currents to demagnetize the magnet element (10) .
